# EUROPEAN PATENT SPECIFICATION

(11) **EP 2 913 636 B1**
(45) Date of publication and mention of the grant of the patent: **06.06.2018**
(21) Application number: 15156935.7
(22) Date of filing: 27.02.2015
(51) Int. Cl.: G01D 4/00, G06Q 50/06, H04Q 9/00, H04L 29/06

(54) **A wireless sensor network**
Drahtloses Sensornetzwerk
Réseau de capteurs sans fil

(30) Priority: 27.02.2014 SE 1400111
(43) Date of publication of application: 02.09.2015
(73) Proprietor: Lund Science AB, 222 21 Lund (SE)
(72) Inventor: Bolmsjö, Magnus, 222 21 Lund (SE)
(74) Representative: Ström & Gulliksson AB

(56) References cited:
- US-A1- 2011 093 221
- US-A1- 2011 254 697
- US-A1- 2012 053 740
- US-A1- 2013 147 635

## Description

### Technical Field

The present invention relates to a wireless sensor network, as well as to sensors for such network. More particularly, the present invention relates to a wireless sensor network for monitoring consumption of basic utilities such as water, electrical power, heat etc.

### Background

Wireless measurements of consumed water, power, or heat is a technical field growing bigger during recent years; not only because of the development of suitable radio technologies allowing the design of robust networks, but also due to the fact that estate owners gain more insight in the benefits of letting each occupant pay for their own consumption.

US2013/147635 and US2011/093221 show examples of prior art systems.

Historically an apartment block is equipped with one solitary heating system, one solitary water contract, whiles the apartment block, as well as each individual apartment, has its own subscription contract for electrical power. Each apartment thus pays for its own consumption of electrical power, however actual consumption of heat and water for each apartment has been split more or less based on lump sums.

The new wireless systems for individual monitoring of consumption will hence allow a fairer split of utility costs such as water, heat, and electrical power.

As the sensors measure actual values monitoring may also be used to draw the attention of the occupants to their actual consumption. This has proven to be a very efficient way of reducing the consumption leading to lower costs and less environmental destruction.

There are however a number of problems associated with existing sensor systems. Firstly, there is no available sensor system for individual monitoring providing reliable information on how a specific action affects the total consumption. Secondly, there is no available sensor system which allows an operator, or estate owner, to configure the system such that the desired data and functionality is obtained.

There is therefore a need for an improved wireless sensor system for monitoring consumed utilities such as water, heat, and electrical power.

### Summary

An object of the present invention is to fulfill the need for improvements of prior art solutions and systems which have been identified.

This object is achieved by a sensor system according to the appended independent claim. Preferred embodiments are defined by the appended dependent claims. As the sensor system is applying a module-based configuration the user interface, being provided by the client application, is capable of presenting data for a user; the presented data is always updated in terms of actual sensor data, but also in terms of actual configuration of the measured utility.

According to a first aspect, a sensor system for monitoring individual consumption of one or more utilities such as power, water, or heat energy in a multi-apartment building area is provided. The sensor system comprises at least one wireless sensor unit being positioned to measure the consumption of a specific utility and being programmed to transmit measured data via radio at specific time intervals, at least one central unit being connected to the internet and being programmed to receive sensor data via radio, and to upload, at specific time intervals, the received sensor data to a database hosted on a remote server, and an internet based client application which provides access to the database after a call to said server, and thereafter displays the data being fetched from the database via a user interface. The database is configured to group received sensor data in one or more modules, each module being associated with sensor data for a specific utility, and the client application is configured to display one or more of said modules, whereby the response from the call to said server controls which modules are being displayed to the user.

In an embodiment, the central unit is connected to the internet either directly via an existing internet connection of the multi-apartment building area, or via a mobile network such as GSM, 3G, or 4G.

In an embodiment, the database is further configured to store one or more conversion factors, each conversion factor being determined in order to convert measured consumption of a specific utility to a price. The client application may be configured to display the price for the measured consumption.

In an embodiment, the database is further configured to store history sensor data, and wherein the client application is programmed to receive and display the history sensor data as a comparison to the new sensor data.

In an embodiment, the central unit is configured to store sensor data being received from the one or more sensor units during a specific time interval, and to upload the collected sensor data to the database at a common occasion.

In an embodiment, the frequency of which the sensor unit is transmitting measured sensor data is shorter than the frequency of which central unit is uploading the received sensor data to the database.

In an embodiment, the frequency of which the sensor unit is transmitting measured sensor data to the central unit is 3-20 times/hour, and wherein the frequency of which the central unit is uploading the received sensor data to the database is 0.5-2 times/hour.

In an embodiment, the frequency of which the central unit is uploading the received sensor data to the database is programmed to vary during the day such that a higher frequency is applied for periods of which the consumption is expected to be increased.

In an embodiment, at least one sensor unit comprises a MBus radio, and wherein the sensor system further comprises one or more routers being configured to receive wireless MBus-based telegrams from existing sensor units, to convert the wireless MBus-based telegrams to ZigBee-based telegrams, and to transmit the converted telegrams to the central unit, and wherein the central unit is configured to receive a ZigBee-based telegram, and to convert the ZigBee-based telegram to a wireless MBus-telegram.

In an embodiment sensor data, preferably the sensor data relating to the consumption of cold water, is encrypted in the database.

In an embodiment, the server, hosting the database, is programmed to provide an alarm to a user or sensor system operator if one or more sensor data stored in the database is above or below a predetermined threshold value interval, or if the increase rate of one or more sensor data stored in the database is above or below a predetermined threshold interval.

The sensor system may further comprise additional sensor units configured to measure one or more conditions within the multi-apartment building area, and wherein said server is programmed to provide an alarm to a user or sensor system operator if one or more sensor data corresponding to said conditions is above or below a predetermined threshold value interval.

The alarm may be provided if i) sensor data representing the consumption of cold water is increasing too rapidly, indicating a water leakage, and/or ii) sensor data representing the consumption of hot water is increasing too rapidly, indicating a water leakage, and/or iii) sensor data representing the consumed heat energy is below a predetermined threshold, indicating an error in the heat energy supply, and/or iv) sensor data representing the consumption of electrical power is increasing too rapidly, indicating that one or more electrical components should be turned off, and/or v) sensor data representing the indoor temperature, provided by one or more temperature sensing sensor units, is above or below a predetermined threshold interval, indicating an error in the heat energy supply, and/or vi) sensor data representing the indoor air flow, provided by one or more air flow sensing sensor units, is above or below a predetermined threshold interval, indicating an error in a ventilation system, and/or vii) sensor data representing the consumption of hot or cold water is below a predetermined threshold, indicating that the resident may be in need of care.

In accordance with the description below, various other aspects are also provided. These aspects, as presented below, may be combined in any combination with each other as well as with the aspect presented above, in order to define solutions which provide advantages over prior art systems.

According to one aspect, a sensor system for monitoring individual consumption of one or more utilities such as power, water, or heat energy in a multi-apartment building area is provided. The sensor system comprises at least one wireless sensor unit being positioned to measure the consumption of a specific utility and being programmed to transmit measured data via radio at specific time intervals, at least one central unit being connected to the internet and being programmed to receive sensor data via radio, and to upload, at specific time intervals, the received sensor data to a database hosted on a remote server, and an internet based client application which provides access to the database after a call to said server, and thereafter displays the data being fetched from the database via a user interface. The database is further configured to store one or more conversion factors, each conversion factor being determined in order to convert measured consumption of a specific utility to a price.

According to one other aspect, a sensor system for monitoring individual consumption of one or more utilities such as power, water, or heat energy in a multi-apartment building area is provided. The sensor system comprises at least one wireless sensor unit being positioned to measure the consumption of a specific utility and being programmed to transmit measured data via radio at specific time intervals, at least one central unit being connected to the internet and being programmed to receive sensor data via radio, and to upload, at specific time intervals, the received sensor data to a database hosted on a remote server, and an internet based client application which provides access to the database after a call to said server, and thereafter displays the data being fetched from the database via a user interface. The frequency of which the sensor unit is transmitting measured sensor data is shorter than the frequency of which central unit is uploading the received sensor data to the database.

According to a yet further aspect, a sensor system for monitoring individual consumption of one or more utilities such as power, water, or heat energy in a multi-apartment building area is provided. The sensor system comprises at least one wireless sensor unit being positioned to measure the consumption of a specific utility and being programmed to transmit measured data via radio at specific time intervals, at least one central unit being connected to the internet and being programmed to receive sensor data via radio, and to upload, at specific time intervals, the received sensor data to a database hosted on a remote server, and an internet based client application which provides access to the database after a call to said server, and thereafter displays the data being fetched from the database via a user interface. The frequency of which the central unit is uploading the received sensor data to the database is programmed to vary during the day such that a higher frequency is applied for periods of which the consumption is expected to be increased.

According to another aspect, a sensor system for monitoring individual consumption of one or more utilities such as power, water, or heat energy in a multi-apartment building area is provided. The sensor system comprises at least one wireless sensor unit being positioned to measure the consumption of a specific utility and being programmed to transmit measured data via radio at specific time intervals, at least one central unit being connected to the internet and being programmed to receive sensor data via radio, and to upload, at specific time intervals, the received sensor data to a database hosted on a remote server, and an internet based client application which provides access to the database after a call to said server, and thereafter displays the data being fetched from the database via a user interface. At least one sensor unit comprises a MBus radio, and wherein the sensor system further comprises one or more routers being configured to receive wireless MBus-based telegrams from existing sensor units, to convert the wireless MBus-based telegrams to ZigBee-based telegrams, and to transmit the converted telegrams to the central unit, and wherein the central unit is configured to receive a ZigBee-based telegram, and to convert the ZigBee-based telegram to a wireless MBus-telegram.

According to a further aspect, a sensor system for monitoring individual consumption of one or more utilities such as power, water, or heat energy in a multi-apartment building area is provided. The sensor system comprises at least one wireless sensor unit being positioned to measure the consumption of a specific utility and being programmed to transmit measured data via radio at specific time intervals, at least one central unit being connected to the internet and being programmed to receive sensor data via radio, and to upload, at specific time intervals, the received sensor data to a database hosted on a remote server, and an internet based client application which provides access to the database after a call to said server, and thereafter displays the data being fetched from the database via a user interface. The sensor data relating to a specific utility, such as the consumption of cold water, is encrypted in the database.

According to a yet further aspect, a sensor system for monitoring individual consumption of one or more utilities such as power, water, or heat energy in a multi-apartment building area is provided. The sensor system comprises at least one wireless sensor unit being positioned to measure the consumption of a specific utility and being programmed to transmit measured data via radio at specific time intervals, at least one central unit being connected to the internet and being programmed to receive sensor data via radio, and to upload, at specific time intervals, the received sensor data to a database hosted on a remote server, and an internet based client application which provides access to the database after a call to said server, and thereafter displays the data being fetched from the database via a user interface. The central unit is programmed to provide an alarm to the database, or directly to a user or sensor system operator if one or more received sensor data is above or below a predetermined threshold value interval, or if the increase rate of one or more received sensor is above or below a predetermined threshold interval.

Additional sensor units configured to measure one or more conditions within the multi-apartment building area may be provided, and the central unit may be programmed to provide an alarm to the database, or directly to a user or sensor system operator if one or more sensor data corresponding to said conditions is above or below a predetermined threshold value interval. The alarm may be provided if i) sensor data representing the consumption of cold water is increasing too rapidly, indicating a water leakage, and/or ii) sensor data representing the consumption of hot water is increasing too rapidly, indicating a water leakage, and/or iii) sensor data representing the consumed heat energy is below a predetermined threshold, indicating an error in the heat energy supply, and/or iv) sensor data representing the consumption of electrical power is increasing too rapidly, indicating that one or more electrical components should be turned off, and/or v) sensor data representing the indoor temperature, provided by one or more temperature sensing sensor units, is above or below a predetermined threshold interval, indicating an error in the heat energy supply, and/or vi) sensor data representing the indoor air flow, provided by one or more air flow sensing sensor units, is above or below a predetermined threshold interval, indicating an error in a ventilation system, and/or vii) sensor data representing the consumption of hot or cold water is below a predetermined threshold, indicating that the resident may be in need of care.

### Brief Description of Drawings

The invention will from hereon be described with reference to the appended drawings, in which:
Fig. 1 is a schematic view of a prior art sensor system;
Fig. 2 is a schematic view of a sensor system according to an embodiment; and
Fig. 3 is a schematic view of a sensor unit according to an embodiment.

### Detailed Description

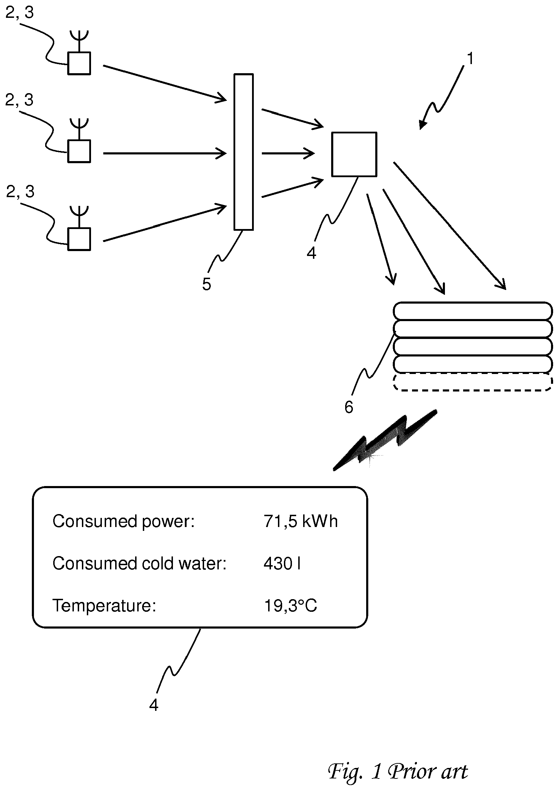

Fig. 1 is a schematic view of a prior art sensor system 1. The sensor system 1 includes a plurality of units 2, wherein each unit 2 is adapted to measure the consumption of a specific utility such as cold water, hot water, or electrical power by means of a wireless sensor 3.

The sensors 3 are based on Wireless MBus, which has a simple point-to-point radio standard. The sensors 3 form a so called star network having a central unit 4 at a center node to which all data is transmitted without intermediate de-routes or data hopping. Each sensor 3 must therefore be within a predetermined distance from the central unit 4. The central unit 4 forms an interface to the surrounding environment, e.g. via internet. Since the range for a wireless sensor 3 is limited (typically <1000 m outside, < 30 m inside), many central units 4 are needed in a typical MBus system installation.

In some cases a repeater 5 may be utilized to extend the range. The repeater 5 is in those cases arranged between the sensor 3 and the central unit 4 and operates by receiving the sensor data and re-sending the sensor data with a certain delay, such as within 10-60 seconds. For practical reasons only one repeater 5 is used in a MBus-network. A problem of existing MBus networks is that the repeater 5 does not have an intrinsic discrimination, but is in fact re-sending everything that has been received. This means that the central unit 4 may receive the same information with a certain delay. If the sensor system 1 is dependent on high frequent updates of measured data a skilled person realizes that an MBus network with a repeater 5 is associated with great disadvantages since transmitted data may be a mix of genuine new data and re-send data; these different types of data may be received non-synchronized without sorting. A further drawback associated with the use of a repeater 5 is that data acknowledgement is lost, i.e. that the central unit 4 confirms data receipt to the sensor 3, thus increasing the risk for data collision significantly, i.e. dual transmitting of data.

In accordance with prior art the central unit 4 transmits measured sensor data to a database 6. A client application, such as a website on the internet, may thereafter call the database 6 via internet and present received data by means of a graphical user interface 7 to a user.

Before turning to specific embodiments of sensor systems according to the present invention, a general description of sensor system characteristics will be given.

### General aspects of a sensor system

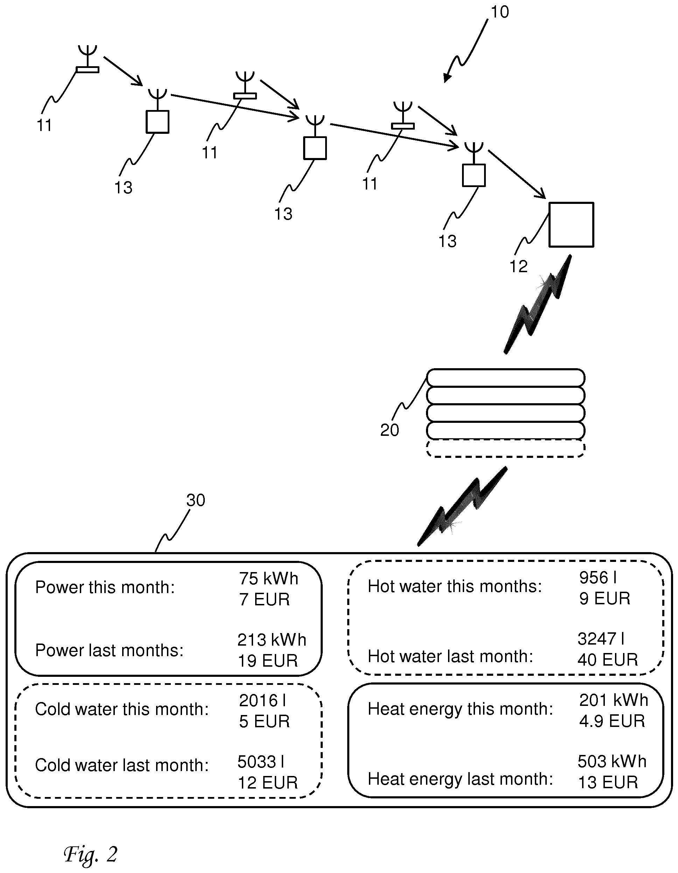

An embodiment of a sensor system 10 is shown in Fig. 2. However, before turning into details of this and other related embodiments some general solutions will be described.

According to a first aspect an improved sensor system may be achieved by providing a wireless sensor system comprising several units, wherein each unit comprises at least one sensor for measuring indoor temperature and/or consumer electrical power, water, or heat. Each unit is reporting measured data several times during the day, preferably as often as six times per hour, to a central unit. The central unit transmits the sensor data to a database of a server, preferably less frequent than the transmittance rate between the units and the central unit.

The database is accessible via internet, and is configured to upon request deliver specific data corresponding to e.g. most recently stored sensor data. The sensor system preferably comprises an internet based client application, e.g. a web site or a smart phone application, which when calling the database is configured to present the specific values being delivered by the database. The client application may be programmed to show one or more of a number of modules, wherein the response from the call to the database controls which one or more modules actually being presented to the user. Residents, or other system users, can thereby log in to the database via the client application and view its own data while the estate owner, or other administrator of the system, may log in an view some or all data depending on level of authorization. A summary for each month or each quarter may be provided from the database content in order to create debiting details for each resident being based on actual consumption.

The sensor system 10 shown in Fig. 2 comprises a number of sensor units 11 communicating with a central unit 12. The sensor units 11 and the central unit 12 may e.g. be based on MBus or other radio standards; in a preferred embodiment the sensor units 11 and the central unit 12 communication via ZigBee. When using ZigBee, a plurality of routers 14 are provided for transmitting measured sensor data from the sensor units 11 to the central unit 12. Even though ZigBee is a well-known radio standard a short description will be given.

ZigBee is characterized by high security; strong encryption is used for ensuring authentic data being free from manipulation. The used encryption technology is 128 bits Advanced Encryption Standard (AES).

A ZigBee network 11, 12, 13 according to Fig. 2 comprises wireless measuring sensor units 11 and data routers 13 being strategically positioned for covering the desired geographical area. The data being transmitted over the ZigBee network is tagged with a destination address and is sent from a sensor unit 11 to the nearest router 13, further to a next router 13, etc. until the data reaches the central unit 12. The transmission procedure is therefore similar to internet TCP/IP in which data is transmitted from one server to another server across the globe unit it reaches the receiver.

Each data transmission, i.e. each time a router 13 receives and forwards data, is verified by so called MAC acknowledgement router-to-router. Final verification confirming that the central unit 12 has received the data may be performed by sending a confirmation back to the original sensor unit 11, so called APS acknowledgement.

If data is not received due to interference or other disturbance re-sending is performed. This strategy, which ZigBee at today's date is the only radio standard implementing, ensures data security at a very high level. A ZigBee network my thus easily be extending by adding more routers 13 to the network.

The central unit 13 is connected to the internet, e.g. by 4G, 4G, GPRS, etc., and the central unit 12 is configured to transmit received sensor data to a database 20 at given times.

Each sensor unit 11 is configured to measure a specific utility, such as consumed power, indoor temperature, water, and/or consumed heat energy, e.g. of a specific apartment of a multi-resident building. Each sensor unit 11 is further provided with a radio circuit for transmitting the measured data to a central unit 12. When the system 10 is arranged to accomplish individual measurements a sensor unit 11 is connected to incoming cold water, incoming hot water, incoming power, or incoming heat energy. Each radio may have several sensor circuits connected thereto, for example one radio circuit may have sensor circuits for hot and cold water as well as indoor temperature connected to it.

When sensor data is received by the central unit 12 the central unit 12 will store the data values until it is programmed to transmit the data values to the database 20.

The sensor units 11 are preferably powered by batteries for facilitating the installation without using wires. The battery's life time is preferably long, such as 10 years since it may be difficult and costly to have access to apartments for battery replacement. The sensor units 11 are therefore preferably configured to be in a standby mode, or sleep mode, for the majority of time. A few milliseconds has turned out to be sufficient in order to change to an ON mode, i.e. waking up, measuring the designated parameters, and transmitting the measured data towards the central unit 12. The transmitted telegram, including measured sensor data, may also include the battery status, i.e. the actual voltage potential of the battery. In addition to this information of the operational time may be included in the telegram that is transmitted to the central unit 12, i.e. information relating to the accumulated ON-time of the sensor unit 11. This information is of particular importance for maintenance of the sensor network, allowing the scheduling and performance of preventive service.

The central unit 12 may also be programmed to count the number of telegrams which is received from each sensor unit 11 within a given time interval, and forward this information to the server storing the database 20. If a sensor unit 11 is expected to transmit data e.g. 6 times each hour,, while the central unit 12 is only receiving three telegrams during one hour, it may be an indication of the position of the sensor unit 11 is close to the border of its range to the nearest router 13. Hence, the sensor network may be in need for an additional router 13, or repositioning of the existing routers 13.

Also the routers 13 may be programmed to send a telegram to the central unit 12 at regular intervals for indicating that they are operating properly. Tests have shown that such telegrams may advantageously be transmitted approximately twice an hour for indicating the status of the routers 13. These telegrams, representing a sign of life of the routers 13, may also be stored in the database 20.

The database 20 is stored on a server being connected to the internet. The database 20 receives measured sensor data from the central unit 12. The database 20 is further configured to group the received sensor data in one or more modules, each module being associated with sensor data of a specific utility and a specific apartment of facility. Normally this means that the database 20 does not perform any active grouping, but allows one module to represent a given sensor unit 11 in those cases wherein one apartment of facility has only one sensor unit 11 for a given utility. If there are two or more sensors for a specific utility, such as an apartment having two lines for incoming cold water, the database 20 may simply group the received sensor data from these sensor units 11 in a common module.

The system also comprises a client application 30, being accessible via internet and which provides access to the database upon calling the specific server storing the database. The client application, preferably being a web site or a smart phone application, may also present the data values being received from the database to a user. The client application 30 is configured to display one or more of the modules.

During use the client application allows a user to see its actual consumption. By specifying its unique user information, such as estate name, apartment number, and password, the client application receives data values from the database 20, wherein the data values are the data values being associated with the specific user information. The database 20 is also configured to store old data representing sensor data values from previous time intervals, e.g. the previous day, week, month, or year. The client application 30 may in a similar manner by configured to also display the old data.

### The sensor units

As already described briefly above, the sensor units 11 are configured to measure a specific utility, such as consumed power, indoor temperature, water, and/or consumed heat energy, e.g. of a specific apartment of a multi-resident building area. The multi-resident, or multi-apartment building area may comprise one or more buildings of which at least one building has several apartments, or the multi-apartment building area may comprise several spaced-apart buildings, each building having only one apartment.

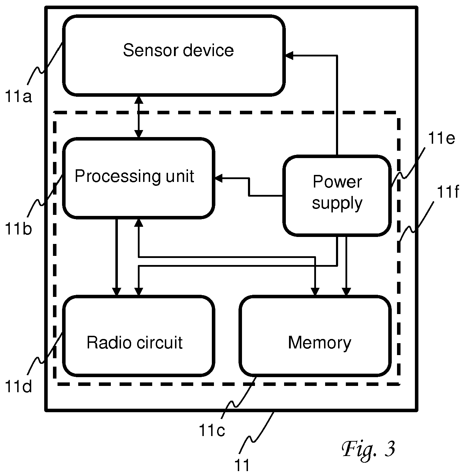

An example of a sensor unit 11 is shown in Fig. 3. The sensor unit 11 comprises at least one sensor device 11a, i.e. a device configured to sense a specific physical property of the environment in which the sensor device 11a is arranged. The sensor device 11a may e.g. be a temperature sensing device, such as a K or T element, a flow meter, a power meter, etc. The sensor device 11a is connected to a processing unit 11b. The processing unit 11b reads the sensed data of the sensor device 11a and stores the sensed data in a memory 11c, also included in the sensor unit 11. The sensor unit 11 also comprises a radio circuit 11d being controlled by the processing unit 11b and configured to transmit data stored in the memory 11c wireless to the central unit 12 when requested by the processing unit 11b. The sensor device 11a, the processing unit 11b, the memory 11c, and the radio circuit 11d are all powered by a power supply 11e, such as a battery.

The entire sensor unit 11 may be enclosed within a common housing 11f .For some situations it may however be advantageous to have the sensor device 11a remotely positioned relative the housing 11f. The sensor device 11a may in such embodiments be connected to the processing unit 11b and the power supply 11e via electrical cables.

The processing unit 11b is overall responsible for the operation and control of the different components of the sensor unit 11. The processing unit 11b may be implemented in any known controller technology, including but not limited to a processor (PLC, CPU, DSP), FPGA, ASIC or any other suitable digital circuitry capable of performing the intended functionality.

The memory 11c may be implemented by any known memory technology, including but not limited to E(E)PROM, S(D)RAM and flash memory, and it may also include secondary storage such as a magnetic or optical disc. Physically, the memory 11c may consist of one unit or a plurality of units which together constitute the memory 11c on a logical level. In addition to measured sensor data the memory 11c also is storing various program instructions and data for the various functions and applications which are typically available in a sensor unit 11. The memory 11c also comprises the program instructions and work data for the processing unit 11b.

In a preferred embodiment the radio circuit 11d is based on the ZigBee protocol. Accordingly, the processing unit 11b is configured to control the radio circuit 11d by means of the ZigBee standard.

### The central unit

As mentioned above the central unit 12 is configured to receive measured sensor data from various sensor units 11, and to forward the received sensor data to a database located on a remote server. In a preferred embodiment the central unit 12 is receiving measured sensor data at a higher frequency than used for transmitting the measured sensor data to the server. For example, the central unit 12 may receive measured sensor data at 6-10 times/hour, while transmitting the measured data to the server is programmed to occur one time each hour. The receiving frequency and the transmitting frequency of the central unit 12, as well as the transmitting frequency of the sensor units 11, may be determined based on specific requirements and needs of a particular application. In one embodiment the transmitting frequency of the central unit 13, i.e. the frequency at which the central unit 13 updates the values of the database 20, is programmed to be dynamic such that a higher frequency is utilized at specific time intervals during the day; the specific time intervals being associated with a relatively high consumption. As an example, an apartment having residents working normal office hours may be equipped with sensor units 11 of a sensor system 10. The transmitting frequency of the central unit 12 may be set to once every four hours, except between 7-9 a.m., 5-7 p.m. and 11-12 p.m. At these intervals the transmitting frequency is set to be much higher, such that 1-10 times an hour.

According to a specific aspect, a central unit 12 is arranged to be used with existing wireless MBus sensor networks. Such existing sensor networks, in principle operating according to Fig. 1 described above, have a plurality of wireless MBus sensor units transmitting sensor data to a central unit which also reports back to the sensor units for data acknowledgement. In order to overcome at least some of the disadvantages of wireless MBus systems, a central unit 12a may be provided having a radio circuit for receiving a ZigBee-based sensor data telegram, a processing unit for converting a received ZigBee-based telegram to wireless MBus-based database information, as well as a second radio circuit for uploading the database information to a remote server. One or more ZigBee-based routers are arranged within a reachable range from the wireless MBus sensor units; each router being configured to receive a wireless MBus-based telegram from the sensor units, and to convert the received telegram to a ZigBee-based telegram. The routers are further configured to forward the converted ZigBee-based telegram (including the same sensor data as the original wireless MBus-based telegram), to the central unit which, after re-conversion of the received ZigBee-based telegram to wireless MBus-based database information, uploads the sensor data to the database on the remote server. According to such aspect, the data traffic is sensor data (wireless MBus) -> router (wireless MBus -> ZigBee) -> central unit (ZigBee -> wireless Mbus).

Hence, a kit for improving an existing wireless MBus sensor network is provided. The kit comprises one or more routers being configured to receive wireless MBus-based telegrams from existing sensor units, to convert the wireless MBus-based telegrams to ZigBee-based telegrams, and to transmit the converted telegrams to a central unit. The kit further comprises at least one central unit being configured to receive a ZigBee-based telegram, and to convert the ZigBee-based telegram to a wireless MBus-telegram.

Within the scope of this aspect, a router is also provided. The router is configured to receive wireless MBus-based telegrams from existing sensor units, to convert the wireless MBus-based telegrams to ZigBee-based telegrams, and to transmit the converted telegrams to a central unit.

Accordingly, a method for improving an existing wireless MBus-sensor network is provided. The method comprises arranging at least one router within a reachable range from one or more existing sensor units, the router being configured to receive wireless MBus-based telegrams from existing sensor units, to convert the wireless MBus-based telegrams to ZigBee-based telegrams, and to transmit the converted telegrams to a central unit. The method further comprises providing a central unit within a reachable range from the at least one router, the central unit being configured to receive a ZigBee-based telegram, and to convert the ZigBee-based telegram to a wireless MBus-telegram.

Also, a wireless sensor system for monitoring the consumption of one or more utilities such as electrical power, heat energy, water, is provided. The sensor system comprises at least one sensor unit being arranged to measure the consumption of a specific utility and being programmed to transmit measured data at a predetermined frequency, and at least one central unit being connected to internet and being programmed to receive sensor data via radio and to upload received sensor data, at a predetermined frequency, to a database located on a server. The sensor system further comprises at least one router being configured to receive wireless MBus-based telegrams from existing sensor units, to convert the wireless MBus-based telegrams to ZigBee-based telegrams, and to transmit the converted telegrams to a central unit. The central unit is configured to receive a ZigBee-based telegram, and to convert the ZigBee-based telegram to a wireless MBus-telegram.

The above mentioned kit and method for this particular aspect may be implemented as a sensor network in accordance with the various aspects described in this specification. Hence, specific embodiments providing advantages for sensor systems described herein are also applicable for the kit and the method for improving an existing wireless MBus sensor network.

### The database and the client application

As described above the database is stored on a server being programmed to update the database content when new sensor data arrives from the central units. The database may store data from a vast amount of sensor systems. In a preferred embodiment the database is constructed by a plurality of tables, e.g. one table representing the ID of apartments being equipped with sensor units, one table representing radio characteristics, one table representing login data, etc. The table storing apartment ID may for example contain information relating to each apartment such as name of person renting the apartment, address, price per unit of cold water, etc., as well as a unique apartment index.

The table storing radio characteristics may store information relating to the type of sensor unit, scaling factors such conversion functions to kWh, liters, etc, as well as a link to the associated apartment. The table representing login data may e.g. list all apartment indexes, as well as associated user ID's and passwords.

Preferably, the sensor data relating to the consumption of cold water is encrypted in the database. The inventor has surprisingly realized that such sensor data, when viewed over time, provides an accurate indication if the person normally living in the apartment is home or away. If the data is encrypted no third party which for the purpose of carrying out criminal activity is obtaining access to the database, may draw such conclusions.

When someone is trying to access the database a TCP/IP connection is established to the server storing the database, and an encrypted request is sent from a client application to the server. In each request information of the specific query as well as user ID and password is preferably included. A request may e.g. be formulated as:
$MOBILE1,Kalle,pass1234.

When receiving such request, the server will look up the apartment corresponding to the user ID "Kalle" and password "pass1234" and thereafter return the requested data to the client application. The TCP/IP connection is thereafter shut down. This solution has proven to be fast and reliable.

Each apartment may preferably have a unique apartment index. Apartment A may e.g. have an index of "100", apartment B may e.g. have an index of "101", etc.

The database is also constructed to assign an attribute to the table representing radio characteristics, the attribute being designed to group one or more sensor units into a specific module. The number of available module types corresponds to the number of measured utilities, each module type being associated with a specific utility. Further, the database stores information if a specific module of a given module type is active or not. Referring back to Fig. 2, the shown example has two active modules and two modules being inactive (dashed contour lines). This means that the specific apartment is provided with sensor units configured to measure the consumption of electrical power (a first module of the power module type), and the consumption of heat energy (a first module of the heat energy module type). In the shown example, sensor units for monitoring the consumption of cold water (a first module of the cold water module type) and sensor units for monitoring the consumption of hot water (a first module of the hot water module type) are missing. Alternatively, and as indicated by Fig. 2, the sensors for monitoring hot and cold water are in fact provided, but the user (apartment resident or real estate owner) has chosen to only have access to power and heat energy consumption.

Each module is preferably associated with specific types of sensor units 11 within the same building unit such as a specific apartment, such that one module corresponds to one or more sensor units 11 providing measured data values representing the consumption of a specific utility. Another module thus corresponds to one or more sensor units 11 providing measured data values representing the consumption of another specific utility.

An apartment having sensor units 11 for monitoring the consumption of a given number of different utilities will be represented in the database by a post having the corresponding number of modules. The client application may consequently be configured in a very efficient manner each time a user chooses to call the database with credentials being unique for that specific apartment.

As is shown in Fig. 2 data is only displayed for those modules being active due to the fact that the response from the call to the database will control which modules are being displayed by the client application. The client application, which preferably forms part of the sensor system, is accessible for a user via a hardware device such as a computer, a smart phone, etc. The client application 30 requires access to the internet and provides access to the database 20 after calling the server at which the database 20 is hosted. The client application 30 is programmed to display one or more of the modules of the database 20, wherein the response telegram resulting from the database call will control which ones of the modules that will be displayed to the user.

Preferably the client application fetches not only data values, but also values which have been converted by a conversion factor being pre-set in the database. The converted values represent actual costs for the consumed utilities. This has proven to be a very efficient way of having users realizing the consequences of their actual consumption, i.e. what they will be required to pay. This solution may thus function as a powerful incitement for reducing consumption and to avoid unnecessary utility waste.

The conversion factor may be constant for the entire system, or it may be dynamic such that a first user, e.g. a resident of a first apartment, will have certain conversion factors for power, water, etc. Another user, e.g. a resident of another apartment, may have different conversion factors thus paying a different price for its utilities. Within the same sensor system the different estates, or apartment blocks, may choose different suppliers of the utilities.

In a further embodiment the conversion factors may also vary between apartments of the same building, wherein the building owner may act as a utility supplier an offer its residents to sign one of several available utility supply agreements (each agreement being associated with a specific conversion factor, i.e. price per unit) depending on desired risk of the residents. This is in line with the model provided by existing utility provides, such as power suppliers, water providers, etc.

### The alarm functionality

The sensor system described above may also be configured to manage security aspects within the apartments by issuing alarms to the user or sensor system operator. For this, additional sensor units may be provided not necessarily monitoring the consumption of utilities, but instead monitoring indoor conditions. The additional sensor units may e.g. be a temperature sensor, an air flow sensor, etc. Sensor data for these additional sensor units is handled in the same manner as for the previously described sensor units, and will thus not be described in further details. The server is thus programmed store sensor data in the database. An alarm algorithm may further be implemented in the central unit 12 for transmitting an alarm if any sensor data, or the change in sensor data over time, is above or below predetermined threshold intervals. The alarm may be transmitted via internet, or even preferably via a mobile network e.g. as an SMS.

For example, an alarm may be transmitted if i) sensor data representing the consumption of cold water is increasing too rapidly, indicating a water leakage, and/or ii) sensor data representing the consumption of hot water is increasing too rapidly, indicating a water leakage, and/or iii) sensor data representing the consumed heat energy is below a predetermined threshold, indicating an error in the heat energy supply, and/or iv) sensor data representing the consumption of electrical power is increasing too rapidly, indicating that one or more electrical components should be turned off, and/or v) sensor data representing the indoor temperature, provided by one or more temperature sensing sensor units, is above or below a predetermined threshold interval, indicating an error in the heat energy supply, and/or vi) sensor data representing the indoor air flow, provided by one or more air flow sensing sensor units, is above or below a predetermined threshold interval, indicating an error in a ventilation system, and/or vii) sensor data representing the consumption of hot or cold water is below a predetermined threshold, indicating that the resident may be in need of care.

It is apparent to a person skilled in the art that with the advancement of technology, the basic idea may be implemented in various ways. The invention and its embodiments are thus not limited to the examples described above; instead they may vary within the scope of the claims.

## Claims

1. A wireless sensor system (10) for monitoring individual consumption of one or more utilities such as power, water, or heat energy in a multi-apartment building area, comprising
at least one wireless sensor unit (11) being positioned to measure the consumption of a specific utility and being programmed to transmit measured data via radio at specific time intervals,
at least one central unit (12) being connected to the internet and being programmed to receive sensor data via radio
a database (20) hosted on a remote server, wherein said at least one central unit (12) is also programmed to upload, at specific time intervals, the received sensor data to the database (20), and
an internet based client application (30) which provides access to the database (20) after a call to said server, and thereafter displays the data being fetched from the database (20) via a user interface,
**characterized in that**
the database (20) is configured to group received sensor data in two or more modules, each module being associated with sensor data for a specific utility originating from the same building unit, said database (20) stores information indicating whether a specific module is active or not, and wherein
the client application (30) is configured to display one or more of said modules, whereby the response from the call to said server controls which modules are being displayed to the user such that data is only displayed for those modules being active.

2. The sensor system according to claim 1, wherein the central unit (12) is connected to the internet either directly via an existing internet connection of the multi-apartment building area, or via a mobile network such as GSM, 3G, or 4G.

3. The sensor system according to claim 1 or 2, wherein the database (20) is further configured to store one or more conversion factors, each conversion factor being determined in order to convert measured consumption of a specific utility to a price.

4. The sensor system according to claim 3, wherein the client application (30) is configured to display the price for the measured consumption.

5. The sensor system according to any one of the preceding claims, wherein the database (20) is further configured to store history sensor data, and wherein the client application (30) is programmed to receive and display the history sensor data as a comparison to the new sensor data.

6. The sensor system according to any one of the preceding claims, wherein the central unit (12) is configured to store sensor data being received from the one or more sensor units (11) during a specific time interval, and to upload the collected sensor data to the database (20) at a common occasion.

7. The sensor system according to any one of the preceding claims, wherein the frequency at which the sensor unit (11) is transmitting measured sensor data is higher than the frequency at which the central unit (12) is uploading the received sensor data to the database (20).

8. The sensor system according to claim 7, wherein the frequency at which the sensor unit (11) is transmitting measured sensor data to the central unit (12) is 3-20 times/hour, and wherein the frequency at which the central unit (12) is uploading the received sensor data to the database (20) is 0.5-2 times/hour.

9. The sensor system according to claim 8, wherein the frequency of which the central unit (12) is uploading the received sensor data to the database (20) is programmed to vary during the day such that a higher frequency is applied for periods of which the consumption is expected to be increased.

10. The sensor system according to any one of the preceding claims, wherein at least one sensor unit (11) comprises a MBus radio, and wherein the sensor system further comprises one or more routers being configured to receive wireless MBus-based telegrams from existing sensor units, to convert the wireless MBus-based telegrams to ZigBee-based telegrams, and to transmit the converted telegrams to the central unit, and wherein the central unit is configured to receive a ZigBee-based telegram, and to convert the ZigBee-based telegram to a wireless MBus-telegram.

11. The sensor system according to any one of the preceding claims, wherein sensor data relating to a specific utility is encrypted in the database (20).

12. The sensor system according to claim 11, wherein the sensor data relating to consumed cold water is encrypted in the database (20).

13. The sensor system according to any one of the preceding claims, wherein the central unit (12) is programmed to provide an alarm to the database (20), or directly to a user or sensor system operator if one or more sensor data received by the central unit (12) is above or below a predetermined threshold value interval, or if the increase rate of one or more sensor data received by the central unit (12) is above or below a predetermined threshold interval.

14. The sensor system according to claim 13, further comprising additional sensor units (11) configured to measure one or more conditions within the multi-apartment building area, and wherein said central unit (12) is programmed to provide an alarm to the database (20), or directly to a user or sensor system operator if one or more sensor data corresponding to said conditions is above or below a predetermined threshold value interval.

15. The sensor system according to claim 13 or 14, wherein said alarm is provided if:
i) sensor data representing the consumption of cold water is increasing too rapidly, indicating a water leakage, and/or
ii) sensor data representing the consumption of hot water is increasing too rapidly, indicating a water leakage, and/or
iii) sensor data representing the consumed heat energy is below a predetermined threshold, indicating an error in the heat energy supply, and/or
iv) sensor data representing the consumption of electrical power is increasing too rapidly, indicating that one or more electrical components should be turned off, and/or
v) sensor data representing the indoor temperature, provided by one or more temperature sensing sensor units, is above or below a predetermined threshold interval, indicating an error in the heat energy supply, and/or
vi) sensor data representing the indoor air flow, provided by one or more air flow sensing sensor units, is above or below a predetermined threshold interval, indicating an error in a ventilation system, and/or
vii) sensor data representing the consumption of hot or cold water is below a predetermined threshold, indicating that the resident may be in need of care.

## Patentansprüche

1. Ein drahtloses Sensorsystem (10) zur Überwachung von individuellem Verbrauch von einer oder mehrerer Leistungen, wie beispielsweise Strom, Wasser oder Wärmeenergie, in einem Gebäudebereich mit mehreren Einheiten, umfassend
mindestens eine drahtlose Sensoreinheit (11), die angeordnet ist, den Verbrauch einer bestimmten Leistung zu messen, und die programmiert ist, die gemessenen Daten per Funk zu bestimmten Zeitintervallen zu übertragen,
mindestens eine Zentraleinheit (12), die mit dem Internet verbunden ist, und die programmiert ist, die Sensordaten per Funk zu empfangen,
eine Datenbank (20), die auf einem externen Server gehostet ist, wobei besagte mindestens eine Zentraleinheit (12) ferner programmiert ist, zu bestimmten Zeitintervallen die empfangenen Sensordaten in die Datenbank (20) hochzuladen, und
eine internetbasierte Client-Applikation (30), die nach einer Anfrage an besagten Server einen Zugang zu der Datenbank (20) bereitstellt, und danach die von der Datenbank (20) abgerufenen Daten über ein User-Interface darstellt,
**dadurch gekennzeichnet, dass**
die Datenbank (20) konfiguriert ist, die empfangenen Sensordaten in zwei oder mehrere Module zu gruppieren,
wobei jedes Modul mit Sensordaten für eine bestimmte Leistung, die der gleichen Gebäudeeinheit entstammen, assoziiert ist, wobei besagte Datenbank (20) Information speichert, die andeutet, ob ein bestimmtes Modul aktiv ist oder nicht, und wobei
die Client-Applikation (30) konfiguriert ist, eines oder mehrere der besagten Module darzustellen, wobei die Antwort auf die Anfrage an den besagten Server steuert, welche Module dem Nutzer angezeigt werden, so dass ausschließlich Daten für aktive Module angezeigt werden.

2. Das Sensorsystem nach Anspruch 1, wobei die Zentraleinheit (12) mit dem Internet entweder direkt über eine bestehende Internetverbindung des Gebäudebereichs mit mehreren Einheiten oder über ein Mobilnetzwerk, wie beispielsweise GSM, 3G oder 4G, verbunden wird.

3. Das Sensorsystem nach Anspruch 1 oder 2, wobei die Datenbank (20) ferner konfiguriert ist, einen oder mehrere Umwandlungsfaktoren zu speichern, wobei jeder Umwandlungsfaktor bestimmt ist, um den gemessenen Verbrauch einer bestimmten Leistung in einen Preis umzuwandeln.

4. Das Sensorsystem nach Anspruch 3, wobei die Client-Applikation (30) konfiguriert ist, den Preis für den gemessenen Verbrauch anzuzeigen.

5. Das Sensorsystem nach einem der vorstehenden Ansprüche, wobei die Datenbank (20) ferner konfiguriert ist, die Historie der Sensordaten zu speichern, und wobei die Client-Applikation (30) programmiert ist, die Historie der Sensordaten als Vergleich zu neuen Sensordaten zu empfangen und darzustellen.

6. Das Sensorsystem nach einem der vorstehenden Ansprüche, wobei die Zentraleinheit (12) konfiguriert ist, Sensordaten zu speichern, die von der einen oder den mehreren Sensoreinheiten (11) während einem bestimmten Zeitintervall empfangen wurden, und die gesammelten Sensordaten bei gegebenem Anlass in die Datenbank (20) hochzuladen.

7. Das Sensorsystem nach einem der vorstehenden Ansprüche, wobei die Frequenz, in der die Sensoreinheit (11) gemessene Sensordaten überträgt, höher ist als die Frequenz, in der die Zentraleinheit (12) die empfangenen Sensordaten in die Datenbank (20) hochlädt.

8. Das Sensorsystem nach Anspruch 7, wobei die Frequenz, in der die Sensoreinheit (11) gemessene Sensordaten an die Zentraleinheit (12) überträgt, 3 bis 20 Mal/Stunde beträgt, und wobei die Frequenz, in der die Zentraleinheit (12) die empfangenen Sensordaten in die Datenbank (20) hochlädt 0.5 bis 2 Mal/Stunde beträgt.

9. Das Sensorsystem nach Anspruch 8, wobei die Frequenz, in der die Zentraleinheit (12) die empfangenen Sensordaten in die Datenbank (20) hochlädt programmiert ist, über den Tag zu variieren, sodass eine höhere Frequenz für Zeitabschnitte angewendet wird, in denen ein erhöhter Verbrauch zu erwarten ist.

10. Das Sensorsystem nach einem der vorstehenden Ansprüche, wobei mindestens eine Sensoreinheit (11) einen MBus-Funk umfasst, und wobei das Sensorsystem ferner einen oder mehrere Router aufweist, die konfiguriert sind, drahtlose MBus-basierende Telegramme von existierenden Sensoreinheiten zu empfangen, die drahtlosen MBusbasierenden Telegramme in ZigBee-basierende Telegramme umzuwandeln, und die umgewandelten Telegramme an die Zentraleinheit zu übertragen, und wobei die Zentraleinheit konfiguriert ist, die ZigBee-basierenden Telegramme zu empfangen, und die ZigBee-basierenden Telegramme in drahtlose MBus-basierende Telegramme umzuwandlen.

11. Das Sensorsystem nach einem der vorstehenden Ansprüche, wobei Sensordaten bezüglich einer bestimmten Leistung in der Datenbank (20) verschlüsselt werden.

12. Das Sensorsystem nach Anspruch 11, wobei die Sensordaten bezüglich des Kaltwasserverbrauchs in der Datenbank (20) verschlüsselt werden.

13. Das Sensorsystem nach einem der vorstehenden Ansprüche, wobei die Zentraleinheit (12) programmiert ist, einen Alarm an die Datenbank (20), oder direkt an einen Nutzer oder einen Sensorsystemoperator bereitzustellen, falls eine oder mehrere der von der Zentraleinheit (12) empfangenen Sensordaten oberhalb oder unterhalb eines vorbestimmten Grenzwertintervalls liegen, oder falls die Anstiegsrate einer oder mehrerer durch die Zentraleinheit (12) empfangener Sensordaten oberhalb oder unterhalb eines vorbestimmten Grenzwertintervalls liegen.

14. Das Sensorsystem nach Anspruch 13, ferner umfassend zusätzliche Sensoreinheiten (11), die konfiguriert sind, eine oder mehrere Bedingungen innerhalb des Gebäudebereichs mit mehreren Einheiten zu messen, und wobei die besagte Zentraleinheit (12) programmiert ist, einen Alarm an die Datenbank (20), oder direkt an einen Nutzer oder Sensorsystemoperator bereitzustellen, falls einer oder mehrere Sensordaten, die besagten Bedingungen entsprechen, oberhalb oder unterhalb eines vorbestimmten Grenzwertintervalls liegen.

15. Das Sensorsystem nach Anspruch 13 oder 14, wobei besagter Alarm bereitgestellt wird, falls:
i) Sensordaten, die den Verbrauch von Kaltwasser repräsentieren, zu schnell ansteigen, was ein Wasserleck andeutet, und/oder
ii) Sensordaten, die den Verbrauch von Heißwasser repräsentieren, zu schnell ansteigen, was ein Wasserleck andeutet, und/oder
iii) Sensordaten, die den Verbrauch von Wärmeenergie repräsentieren, unterhalb eines vorbestimmten Grenzwerts liegen, was einen Fehler in der Wärmeenergieversorgung andeutet, und/oder
iv) Sensordaten, die den Verbrauch von elektrischer Leistung repräsentieren, zu schnell ansteigen, was andeutet, dass eine oder mehrere elektrische Komponenten abgeschaltet werden sollten, und/oder
v) Sensordaten, die die Innentemperatur repräsentieren und durch eine oder mehrere Temperaturmesssensoreinheiten bereitgestellt sind, oberhalb oder unterhalb eines vorbestimmten Grenzwertintervalls liegen, was einen Fehler in der Wärmeenergieversorgung andeutet, und/oder
vi) Sensordaten, die den in den Luftstrom repräsentieren und durch eine oder mehrere Luftstrom Meßsensoreinheiten bereitgestellt sind, oberhalb oder unterhalb eines vorbestimmten Grenzintervalls liegen, was einen Fehler in dem Ventilationssystem andeutet, und/oder
vii) Sensordaten, die den Verbrauch von Heiß- oder Kaltwasser repräsentieren, unterhalb eines vorbestimmten Grenzwerts liegen, was andeutet, dass der Anwohner möglicherweise Hilfe benötigt.

## Revendications

1. Système de capteurs sans fil (10) pour surveiller une consommation individuelle d'un ou plusieurs services de distribution tels qu'une énergie électrique, l'eau ou une énergie de chauffage dans une zone de bâtiment à appartements multiples, comprenant
au moins une unité de capteur sans fil (11) étant positionnée pour mesurer la consommation d'un service de distribution spécifique et étant programmée pour transmettre des données mesurées via radio à des intervalles de temps spécifiques,
au moins une unité centrale (12) étant connectée à Internet et étant programmée pour recevoir des données de capteur via radio
une base de données (20) hébergée sur un serveur distant, dans lequel ladite au moins une unité centrale (12) est également programmée pour télécharger, à des intervalles de temps spécifiques, les données de capteur reçues à la base de données (20), et
une application client basée sur Internet (30) qui donne accès à la base de données (20) après un appel audit serveur, et ensuite affiche les données qui sont extraites de la base de données (20) via une interface utilisateur,
**caractérisé en ce que**
la base de données (20) est configurée pour grouper des données de capteur reçues en deux ou plusieurs modules, chaque module étant associé à des données de capteur pour un service de distribution spécifique provenant de la même unité de bâtiment, ladite base de données (20) stocke des informations indiquant si un module spécifique est ou non actif, et dans lequel
l'application client (30) est configurée pour afficher un ou plusieurs desdits modules, moyennant quoi la réponse provenant de l'appel audit serveur commande quels modules sont actuellement affichés pour l'utilisateur de manière que des données soient affichées seulement pour ces modules qui sont actifs.

2. Système de capteurs selon la revendication 1, dans lequel l'unité centrale (12) est connectée à Internet soit directement via une connexion Internet existante de la zone de bâtiment à appartements multiples, soit via un réseau mobile tel que GSM, 3G ou 4G.

3. Système de capteurs selon la revendication 1 ou 2, dans lequel la base de données (20) est configurée en outre pour stocker un ou plusieurs facteurs de conversion, chaque facteur de conversion étant déterminé de manière à convertir une consommation mesurée d'un service de distribution spécifique en un prix.

4. Système de capteurs selon la revendication 3, dans lequel l'application client (30) est configurée pour afficher le prix pour la consommation mesurée.

5. Système de capteurs selon l'une quelconque des revendications précédentes, dans lequel la base de données (20) est configurée en outre pour stocker des données de capteur d'historique, et dans lequel l'application client (30) est programmée pour recevoir et afficher les données de capteur d'historique sous la forme d'une comparaison avec de nouvelles données de capteur.

6. Système de capteurs selon l'une quelconque des revendications précédentes, dans lequel l'unité centrale (12) est configurée pour stocker des données de capteur qui sont reçues à partir de l'une ou plusieurs unités de capteur (11) durant un intervalle de temps spécifique, et pour télécharger les données de capteur collectées à la base de données (20) à une occasion commune.

7. Système de capteurs selon l'une quelconque des revendications précédentes, dans lequel la fréquence à laquelle l'unité de capteur (11) transmet des données de capteur mesurées est supérieure à la fréquence à laquelle l'unité centrale (12) télécharge les données de capteur reçues à la base de données (20).

8. Système de capteurs selon la revendication 7, dans lequel la fréquence à laquelle l'unité de capteur (11) transmet des données de capteur mesurées à l'unité centrale (12) est de 3-20 fois/heure, et dans lequel la fréquence à laquelle l'unité centrale (12) télécharge les données de capteur reçues à la base de données (20) est de 0,5-2 fois/heure.

9. Système de capteurs selon la revendication 8, dans lequel la fréquence à laquelle l'unité centrale (12) télécharge les données de capteur reçues à la base de données (20) est programmée pour varier durant le jour de manière qu'une fréquence supérieure soit appliquée pour des périodes pour lesquelles la consommation est supposée être augmentée.

10. Système de capteurs selon l'une quelconque des revendications précédentes, dans lequel au moins une unité de capteur (11) comprend une radio MBus, et dans lequel le système de capteurs comprend en outre un ou plusieurs routeurs qui sont configurés pour recevoir des télégrammes basés sur MBus sans fil, à partir d'unités de capteur existantes, pour convertir les télégrammes basés sur MBus sans fil en télégrammes basés sur ZigBee, et pour transmettre les télégrammes convertis à l'unité centrale, et dans lequel l'unité centrale est configurée pour recevoir un télégramme basé sur ZigBee, et pour convertir le télégramme basé sur ZigBee en un télégramme basé sur MBus sans fil.

11. Système de capteurs selon l'une quelconque des revendications précédentes, dans lequel des données de capteur relatives à un service de distribution spécifique sont chiffrées dans la base de données (20).

12. Système de capteurs selon la revendication 11, dans lequel les données de capteur relatives à de l'eau froide consommée sont chiffrées dans la base de données (20) .

13. Système de capteurs selon l'une quelconque des revendications précédentes, dans lequel l'unité centrale (12) est programmée pour fournir une alarme à la base de données (20), ou directement à un utilisateur ou un opérateur de système de capteurs si une ou plusieurs données de capteur reçues par l'unité centrale (12) sont au-dessus ou au-dessous d'un intervalle de valeurs de seuil prédéterminé, ou si le taux d'augmentation d'une ou plusieurs données de capteur reçues par l'unité centrale (12) est au-dessus ou au-dessous d'un intervalle de seuil prédéterminé.

14. Système de capteurs selon la revendication 13, comprenant en outre des unités de capteur additionnelles (11) configurées pour mesurer une ou plusieurs conditions dans la zone de bâtiment à appartements multiples, et dans lequel ladite unité centrale (12) est programmée pour fournir une alarme à la base de données (20), ou directement à un utilisateur ou un opérateur de système de capteurs si une ou plusieurs données de capteur correspondant auxdites conditions sont au-dessus ou au-dessous d'un intervalle de valeurs de seuil prédéterminé.

15. Système de capteurs selon la revendication 13 ou 14, dans lequel ladite alarme est fournie si :
i) des données de capteur représentant la consommation d'eau froide augmentent trop rapidement, indiquant une fuite d'eau, et/ou
ii) des données de capteur représentant la consommation d'eau chaude augmentent trop rapidement, indiquant une fuite d'eau, et/ou
iii) des données de capteur représentant l'énergie de chauffage consommée sont au-dessous d'un seuil prédéterminé, indiquant une erreur dans la fourniture d'énergie de chauffage, et/ou
iv) des données de capteur représentant la consommation d'énergie électrique augmentent trop rapidement, indiquant qu'un ou plusieurs composants électriques devraient être désactivés, et/ou
v) des données de capteur représentant la température intérieure, fournies par une ou plusieurs unités de capteur de détection de température, sont au-dessus ou au-dessous d'un intervalle de seuil prédéterminé, indiquant une erreur dans la fourniture d'énergie de chauffage, et/ou
vi) des données de capteur représentant le débit d'air intérieur, fournies par une ou plusieurs unités de capteur de détection de débit d'air, sont au-dessus ou au-dessous d'un intervalle de seuil prédéterminé, indiquant une erreur dans un système d'aération, et/ou
vii) des données de capteur représentant la consommation d'eau chaude ou froide sont au-dessous d'un seuil prédéterminé, indiquant que le résident peut avoir besoin de soins.
